# EUROPEAN PATENT APPLICATION

(11) **EP 2 879 242 A1**
(43) Date of publication of application: **03.06.2015**
(21) Application number: 13195354.9
(22) Date of filing: 02.12.2013
(51) Int. Cl.: H01R 13/56, H01R 35/02, G02B 6/38, G02B 6/36, H01R 24/86

(54) **Optical-electrical connector with rotatable element**

(71) Applicant: Alcatel- Lucent Shanghai Bell Co., Ltd, 201206 Shanghai (CN)
(72) Inventor: Schumacher, Otto, 30179 Hannover (DE); Mahlandt, Erhard, 30179 Hannover (DE)
(74) Representative: DREISS Patentanwälte PartG mbB

(57) **Abstract**

The invention relates to a hybrid connector (100; 100a) comprising at least one electric contact element (110) and at least one optical contact element (112), wherein said at least one electric contact element (110) and said at least one optical contact element (112) are arranged in a mounting element (120; 120') of said connector (100; 100a), and wherein said mounting element (120; 120') is rotatably attached to a housing element (130) of said connector (100).

## Description

### Field of the invention

The invention relates to a hybrid connector comprising at least one electric contact element and at least one optical contact element.

### Background

In order to mate male and female hybrid connectors it is necessary that both connectors are precisely aligned with respect to each other. Hybrid cables, which comprise hybrid connectors of the aforementioned type, are often made with aluminium armor or other protective members so that the whole cable is rather rigid or stiff and has to be rotated around its longitudinal axis to align mating connectors which each other. Evidently, this results in rather complex cable assemblies with a strict sequence of installation of different components. In many cases, the cable routing and installation of at least one of the assemblies has to be started from the position of the joint with the mating connectors.

### Summary

Accordingly, it is an object of the present invention to provide an improved hybrid connector which enables to overcome the abovementioned disadvantages.

According to the present invention, this object is achieved by said at least one electric contact element and said at least one optical contact element being arranged in a mounting element of said connector, and by said mounting element being rotatably attached to a housing element of said connector. I.e., the mounting element which comprises said optic and electric contact elements is attached to the housing element and can be rotated with respect to said housing element. Thereby, the contact elements of the connector may advantageously be aligned with corresponding contact elements of a mating connector, without requiring the complete cable to be rotated. Rather, it is sufficient to rotate the mounting element according to the embodiments.

According to an embodiment, said mounting element is integrated into a main body of said connector, whereby the contact elements are protected from environmental influences by means of the main body.

According to a further embodiment, said mounting element forms a part of the main body of said connector. For example, in this embodiment, the mounting element may comprise a similar shape as the remaining main body (housing element) of the connector, but is rotatably attached thereto.

According to a further embodiment, said mounting element is rotatably attached to said housing element such that a total angle of rotation of said mounting element relative to said housing element is limited to about 400 degrees or less, preferably to about 200 degrees or less. This helps to prevent excessive tensile and/or rotational stress for the cable portions connected to the electric and/or optical contact elements. In many cases, a maximum range of relative rotation between the mounting element and said housing element of about 200 degrees will be sufficient to enable efficient alignment with mating connectors.

According to a further embodiment, at least one of said electric contact element and said optical contact element is rotatably attached to said mounting element. In other words, the electric contact element and/or said optical contact element can rotate, preferably freely, within respective openings of the mounting element where they are attached to. Thus, the contact elements and attached wires / fibers may rotate counterwise to the mounting element themselves. As a consequence there would be reduced or even no torsional forces on the fibers / wires. Rather, they would only bend in a different direction.

According to a further embodiment, at least one friction element is provided which is configured to apply a friction force to said mounting element. This helps to keep the mounting element in place during alignment, even if bent fibers and especially electrical conductors such as wires of the connector exert restoring forces on the mounting element during its rotation.

According to a further embodiment, a mechanical alignment element is provided which is configured to establish form closure with a further mechanical alignment element of a further, mating, connector being connected to said connector, whereby precise alignment is enabled without requiring to exert any stress on the electric or optical contact elements of the mating connectors.

According to a further embodiment, said mounting element comprises a basically cylindrical shape, preferably circular cylindrical shape, with one or more openings for receiving said contact elements. In a preferred embodiment, the mounting element comprises basically a circular disc shape.

According to a further embodiment, said mounting element comprises at least one groove on a radial outer surface and/or a front surface of said basically cylindrical shape. The groove may work together with one or more pins and/or ridges, which may be arranged on a portion of the housing element such that they face the groove. Thereby, limitation of relative rotational motion between the mounting element and the housing element may be achieved.

A further solution to the object of the present invention is given by a cable, preferably a hybrid cable, comprising at least one connector according to the embodiments.

### Brief description of the figures

Further features, aspects and advantages of the present invention are given in the following detailed description with reference to the drawings in which:
- Figure 1: schematically depicts a side view of a hybrid connector according to an embodiment,
- Figure 2: schematically depicts a side view of a hybrid connector according to a further embodiment,
- Figure 3a, 3b, 3c: schematically depict cross-sectional side views of a hybrid connector according to further embodiments,
- Figure 4a: schematically depicts a front view of a mounting element of a connector according to an embodiment,
- Figure 4b: schematically depicts a cross-sectional side view of the mounting element of Figure 4a,
- Figure 5a: schematically depicts a front view of the mounting element of Figure 4a mounted into a connector according to an embodiment,
- Figure 5b: schematically depicts a cross-sectional side view of the configuration of Figure 5a,
- Figure 6a: schematically depicts a front view of a mounting element according to a further embodiment,
- Figure 6b: schematically depicts a cross-sectional side view of a connector with the mounting element of Figure 6a,
- Figure 7a, 7b, 7c: schematically depict front views of a hybrid connector according to a further embodiment with different rotational states of a mounting element,
- Figure 8a, 8b: schematically depict cross-sectional side views of a hybrid connector according to further embodiments,
- Figure 9: schematically depicts mating male and female connectors according to an embodiment in a cross-sectional top view,
- Figure 10a to 10e: schematically depict aspects of a connector according to a further embodiment.

### Description of the embodiments

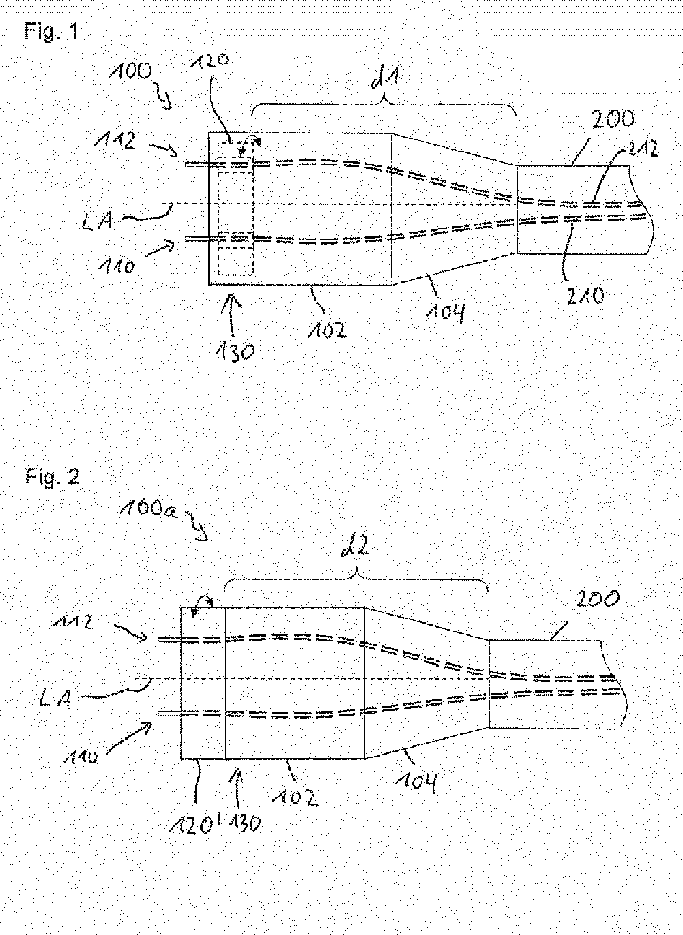

Figure 1 schematically depicts a side view of a hybrid connector 100 according to an embodiment. The connector 100 comprises a main body 102 and a cable interface section 104, which is configured to receive an end portion of a cable 200, preferably a hybrid cable having one or more electrical conductors and one or more optical conductors. Presently, one electrical conductor 210 and one optical conductor 212 of the hybrid cable 200 is depicted.

The connector 100 comprises at least one electric contact element 110 and at least one optical contact element 112. The contact elements 110, 112 are attached to a mounting element 120 of the connector 100. Further, corresponding end sections of the conductors 210, 212 of the cable 200 may be connected in an electrically and/or optically conductive manner to the contact elements 110, 112 as is known in the art. For example, an end portion of the electrical conductor 210 may be soldered or clamped to the electric contact element 110, while an end portion of the optical conductor 212 may be plugged into the optical contact element 112.

According to the principle of the embodiments, said mounting element 120 is rotatably attached to a housing element 130 of said connector 100, wherein according to the Figure 1 embodiment, the housing element 130 is an axial end portion of the main body 102. Thus, the mounting element 120 together with the contact elements 110, 112 attached thereto may be rotated around e.g. a longitudinal axis LA (also cf. the curved double arrow) of the connector 100, whereby the contact elements 110, 112 can advantageously be aligned for mating with another, complementary connector (not shown in Figure 1). Thus, it is not required to rotate the whole connector 100 together with the cable 200 for alignment purposes, which significantly reduces installation complexity of a cable 200 equipped with the connector 100 in the field, e.g. for integration in existing systems. Rather, only the mounting element 120 may be rotated to bring into alignment its connectors 110, 112 with complementary connecting elements of the mating connector (not shown in Fig. 1).

According to a preferred embodiment, the main body 102 and the cable interface section 104 of the connector 100 is configured such that a free movement length d1 for the conductors 210, 212 of the cable exceeds a predetermined threshold, which may be chosen depending on one or more of the following criteria: overall number of conductors 210, 212 of the cable 200, diameter of the conductors, mechanical strength of the conductors, and the like. According to a particularly preferred embodiment, the free movement length d1 is about 1 cm or more, preferably about 2 cm or more.

Figure 2 schematically depicts a side view of a hybrid connector 100a according to a further embodiment. In contrast to the embodiment according to Figure 1, where said mounting element 120 is integrated into an axial end portion 130 of the main body 102 of the connector, according to the embodiment of Figure 2, the mounting element 120' forms a part of the main body 102 of the connector 100a. In this embodiment, the mounting element 120' may e.g. be rotatably attached to an axial end portion of the housing element 130, whereas the mounting element 120 of Figure 1 is arranged radially inwards of said housing element 130.

According to a preferred embodiment, also with the configuration of Figure 2 a minimum free movement length d2 is provided to enable free bending/rotational movement of the conductors with respect to the cable 200. However, due to the arrangement of the mounting element 120' at an axial end portion of the main body 102, d2 may be chosen to be smaller than d1 of Figure 1 to attain the same free movement of the conductors while rotating the mounting element 120'.

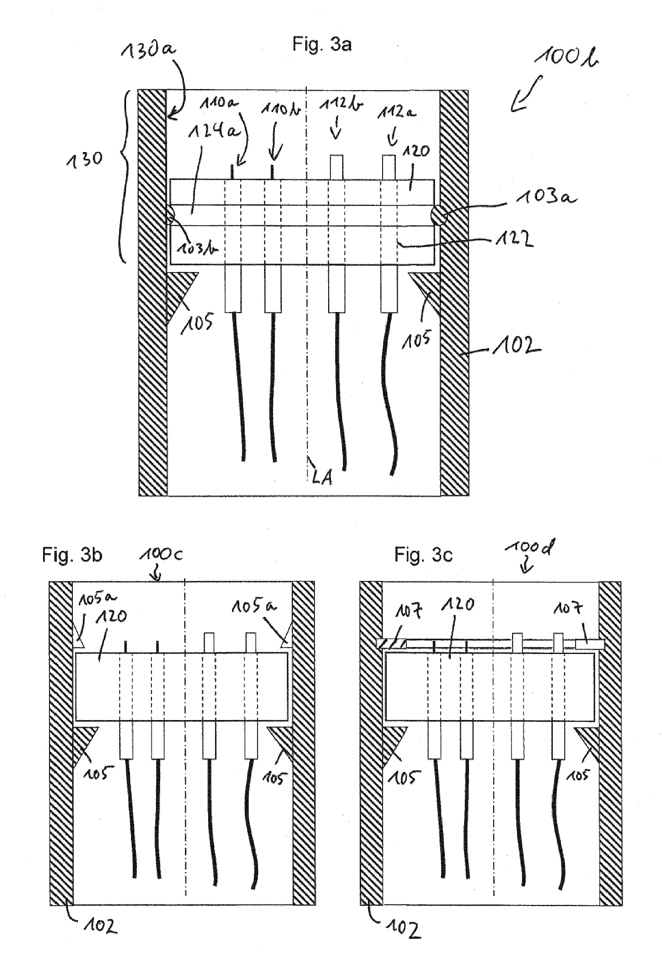

Figure 3a schematically depicts a cross-sectional side view of a hybrid connector 100b according to a further embodiment, wherein the cable interface section 104 and the cable 200 are not depicted for the sake of clarity. As can be seen from Figure 3a, the configuration of the mounting element 120 is similar to that one depicted by Figure 1 in that said mounting element 120 is integrated into the main body 102, i.e. arranged radially inwards of said main body 102 or its axial end portion 130, respectively.

The electric contact elements 110a, 110b are arranged in, i.e. mounted to, the mounting element 120, i.e. by securing them in respective openings 122 of the mounting element 120. The openings may e.g. be implemented as bore holes which extend with their longitudinal axis basically in parallel to the longitudinal axis LA of the connector 100b.

The optical contact elements 112a, 112b are arranged in said mounting element 120 likewise. For example, the optical conductors of the cable 200 (Figure 1) may already comprise optical connection elements which may be secured into the openings 122 of the mounting element 120.

According to the present embodiment, the mounting element 120 comprises basically disc form (i.e., circular cylindrical shape). Additionally, the mounting element 120 comprises a groove 124a on its radially outer surface, which is a side surface (German: "Mantelflaeche") of the cylindrical shape. One or more ridges 103a, 103b or bulges are provided on a radially inner surface 130a of the housing element 130 which work together (e.g., by form closure) with the groove 124a of the mounting element 120, whereby an angular range of rotation of said mounting element 120 with respect to the housing element 130 or the main body 102 may be limited to a desired value of about e.g. 180 degrees or 200 degrees. For example, the length of the groove may be chosen depending on the desired angular range for rotation. Also, the groove 124a provides guidance for the rotational movement of the mounting element 120. Optionally, one or more protrusions 105 may also be provided on the inner surface 130a to additionally secure the mounting element 120 in its axial position with respect to the main body 102.

According to an embodiment, the groove 124a may extend around the whole circumference of the mounting element 120 thus providing guidance for rotational movement of said mounting element 120 within the main body 102. Alternatively, the groove 124a may only extend around a part of the circumference of the mounting element 120. According to further embodiments, this also applies to the ridges 103a, 103b and/or protrusions 105. I.e., according to some embodiments, the ridge(s) 103a may extend around the whole circumference of the mounting element 120. According to further embodiments, the ridge(s) 103a may only extend around a part of the circumference of the mounting element 120.

Figure 3b schematically depicts a cross-sectional side view of a hybrid connector 100c according to a further embodiment, wherein the cable interface section 104 and the cable 200 are not depicted for the sake of clarity. In contrast to the groove/ridge mechanism of Figure 3a, the present embodiment provides further protrusions 105a, so that mounting element 120 may be clamped into its mounting position depicted by Figure 3b, and it is secured in this mounting position in an axial direction by the protrusions 105, 105a.

Figure 3c schematically depicts a cross-sectional side view of a hybrid connector 100d according to a further embodiment, wherein the cable interface section 104 and the cable 200 are not depicted for the sake of clarity. This embodiment comprises a spring lock washer 107 which can be secured in a groove on the inner surface 130a of the main body, said spring lock washer 107 (together with the protrusions 105) retaining the mounting element 120 in its mounting position.

The embodiments according to Figures 3a, 3b preferably provide the mounting element 120 being made of an elastic material, e.g. elastic plastic material (preferably electrically isolating material), so that a) the ridge(s) 103a, 103b can be inserted into the groove 124a by at least partly elastically deforming the mounting element 120 and b) the mounting element 120 can be axially inserted between the protrusions 105, 105a. While the mounting element 120 of Figure 3c may also comprise elastic material, the spring lock washer mechanism also enables to use non-elastic material for the mounting element 120.

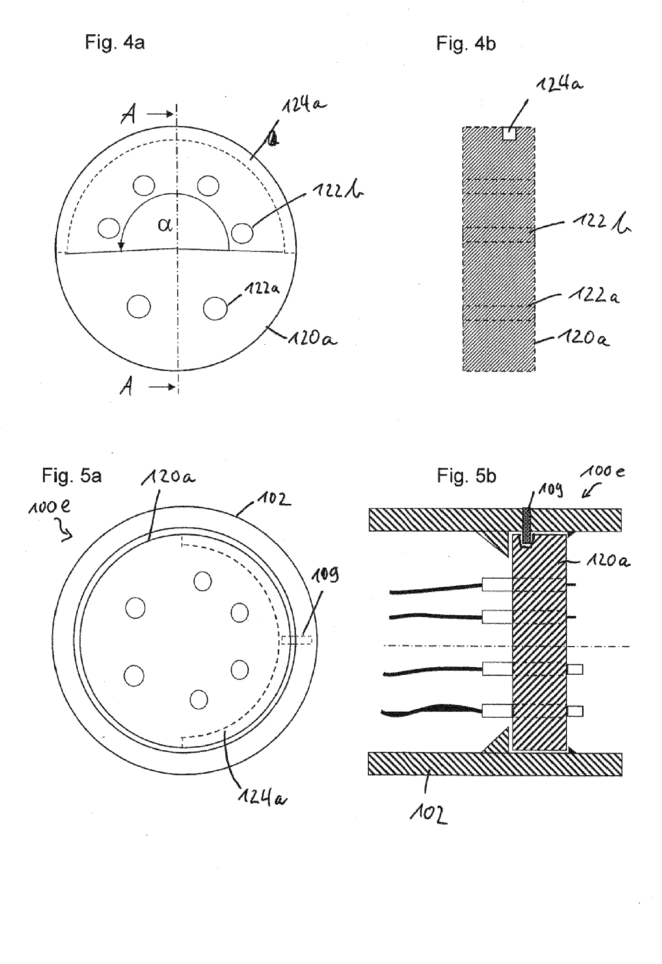

Figure 4a schematically depicts a front view of a mounting element 120a of a connector according to a further embodiment. A cross-sectional side view of the mounting element 120a of Figure 4a along the line A-A is depicted by Figure 4b.

The mounting element 120a comprises various openings, e.g. bore holes, only two of which are provided with reference numerals 122a, 122b, for receiving contact elements 110, 112 of electrical and/or optical type. The mounting element 120a comprises a groove 124a on its radially outer surface (peripheral surface), which is a side surface of the basically circular cylindrical shape of the mounting element 120a. The groove 124a may establish form closure with a pin 109, said pin being arranged on a radial inner surface 130a (Figure 3a) of a main body 102 of the connector, also cf. Figure 5a, where a front view of the mounting element 120a of Figure 4a mounted into a connector 100e according to an embodiment is depicted. As can be seen from Figures 4a, 5a, the pin/groove mechanism 109, 124a limits a relative rotation of the mounting element 120a with respect to the pin 109 and thus the main body 102 to a maximum corresponding to the angle α depicted by Figure 4a and thus prevents conductors connected to the mounting element 120a from excessive twisting during rotation of the mounting element 120a.

Figure 5b schematically depicts a cross-sectional side view of the configuration 100e of Figure 5a. Instead of the pin 109, a screw or headless screw (not shown) may be used, which may e.g. be pushed or screwed through the main body 102 thus entering the groove 124a.

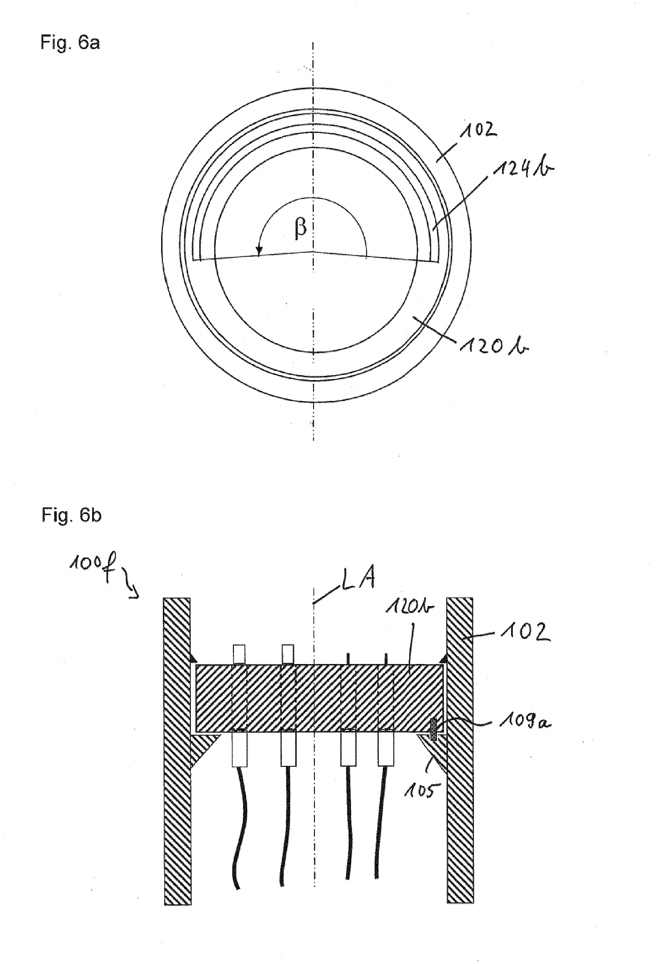

Figure 6a schematically depicts a front view of a mounting element 120b according to a further embodiment. Said mounting element 120b comprises a circular groove 124b on a front surface, which extends over an angle β. Figure 6a also depicts the main body 102 of a connector surrounding the mounting element 120b.

Figure 6b schematically depicts a cross-sectional side view of a connector 100f with the mounting element 120b of Figure 6a. As can be seen, a pin 109a is provided on a surface of protrusion 105, the pin 109a extending basically in parallel to the longitudinal axis LA of the connector 100f and being inserted in the front surface-type groove 124b (Figure 6a) of mounting element 120b, whereby a relative rotation of components 102, 120b is limited to the angle β.

According to a further embodiment (not shown), a groove can be applied to the main body 102, or in the protrusion 105, which according to an embodiment may be monolithically integrated into the main body 102. Likewise, the angular range of the groove is to be limited to the required degree. A pin or headless screw may e.g. be applied to the rotatable mounting element 120b and locks into the groove in the main body 102. The pin can also be an integral part of the mounting element 120b.

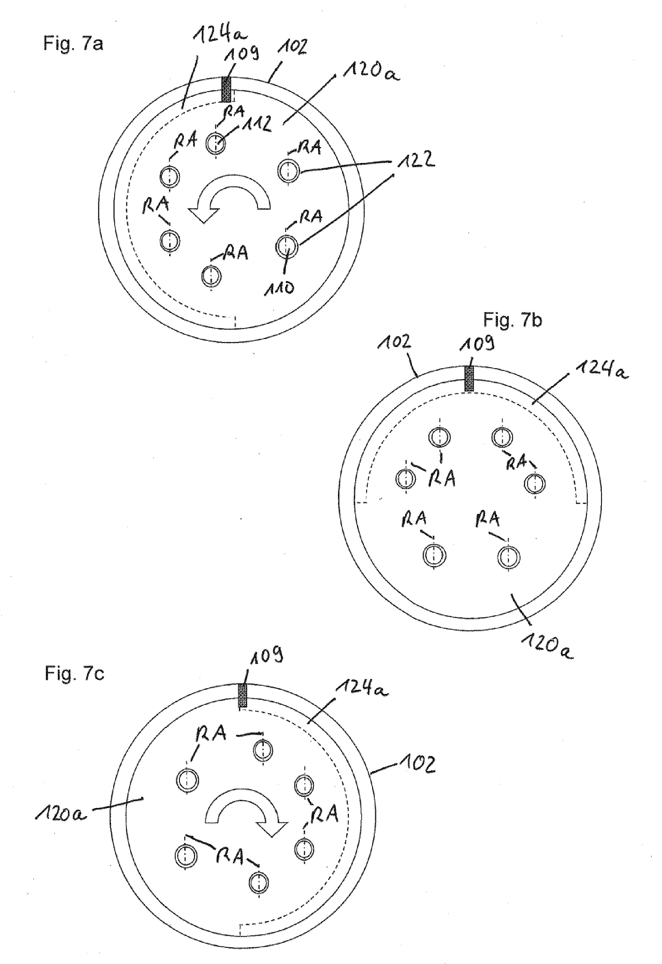

Figure 7a, 7b, 7c schematically depict front views of a hybrid connector according to a further embodiment with different rotational states of a mounting element 120a. For example, the connector depicted by Fig. 7a, 7b, 7c may comprise a configuration similar to Figures 4a to 5b, i.e. with the mounting element 120a having a groove 124a on its side surface and a pin 109 being fixedly attached to the main body 102 and extending radially inwards into the groove 124a.

In Figure 7a, the mounting element 120a is in a first angular end position with respect to the pin 109 and the main body 102. In Figure 7c, the mounting element 120a is in a second angular end position, which corresponds to a rotation of about 180 degrees as compared to the first angular end position of Figure 7a. In Figure 7b, the mounting element 120a is in an intermediate angular position which corresponds to a rotation of about 90 degrees as compared to the first angular end position of Figure 7a.

According to a preferred embodiment, at least one of said electric contact element 110 and said optical contact element 112, which are arranged in said mounting element 120a, is rotatably attached to said mounting element 120a. In other words, the electric contact element 110 and/or said optical contact element 112 can rotate, preferably freely, within the respective openings 122 of the mounting element 120a where they are attached to. Thus, the contact elements 110, 112 and attached wires / fibers (210, 212, cf. Figure 1) may rotate e.g. counterwise to a rotation of the mounting element 120a. As a consequence there would be reduced or even no torsional forces on the fibers / wires 210, 212. Rather, the fibers/wires 210, 212 would only bend in a different direction, whereby mechanical stress of said components 210, 212 due to aligning rotation of the mounting element 120a is minimized.

The rotatable attachment of the electric contact element 110 and/or said optical contact element 112 is symbolized in Figures 7a to 7c by the fact that reference axes RA of the elements 110, 112 are always vertically aligned, independent of the angular position of the mounting element 120a.

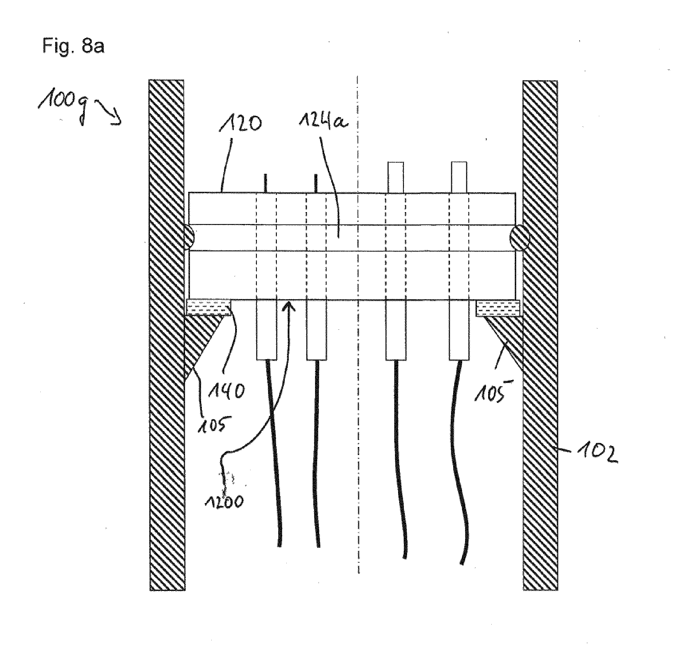

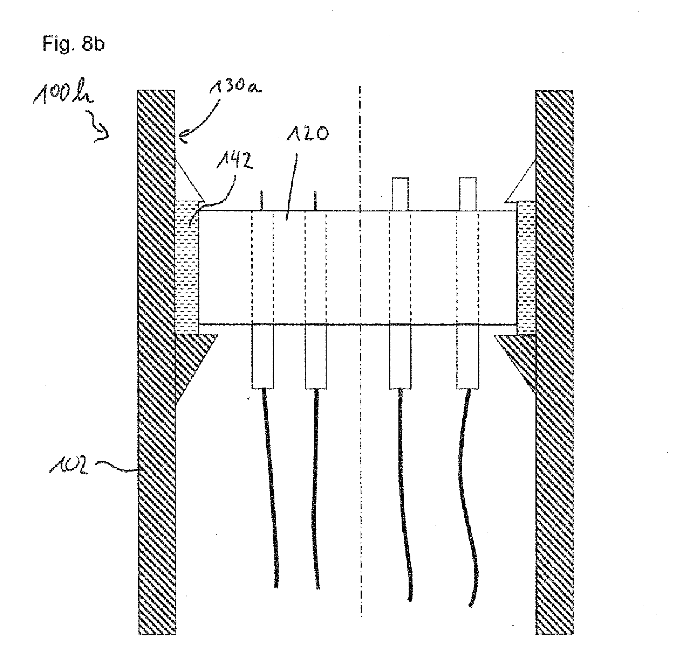

Figure 8a, 8b schematically depict cross-sectional side views of hybrid connectors 100g, 100h according to further embodiments, which provide friction elements 140, 142 to effect a predetermined friction force upon the mounting element 120 which serves to retain the mounting element 120 in a desired angular position with respect to the main body 102 of the connector, e.g. against restoring forces which may be present upon rotating the mounting element 120 due to rigidity of the conductors/cables 210, 212 applied thereto.

The connector 100g of Figure 8a comprises a friction element 140 which may e.g. have the form of a washer, said friction element 140 both contacting an axial end surface 1200 of the mounting element 120 and an axial end surface of the protrusions 105.

The connector 100h of Figure 8b comprises a friction element 142 which is arranged radially between said main body 102 and said mounting element 120 thus effecting friction between an inner surface 130a of the main body 102 and a side surface of the mounting element 120.

According to an embodiment, the friction elements 140, 142 may comprise or be made of felt material.

According to a further embodiment, to effect the desired friction force which helps to retain the mounting element 120 in a desired angular position, the body of the mounting element 120 can be made with a slight oversize compared to the main body, i.e. having an outer diameter which substantially equals or even exceeds the inner diameter of the main body 102 or the housing element 130 it is integrated into.

According to a further embodiment, to effect the desired friction force, small barbs and/or groovings (not shown) could be added on the inner surface 130a which interact with the side surface of the mounting element 120.

According to a further embodiment, a raster (not shown) could be used realized by a saw tooth shape on a portion of the mounting element's side and/or front surface, wherein a spring, protrusion and/or ridge is provided on an opposing surface of the main body 102 that grips into the saw teeth.

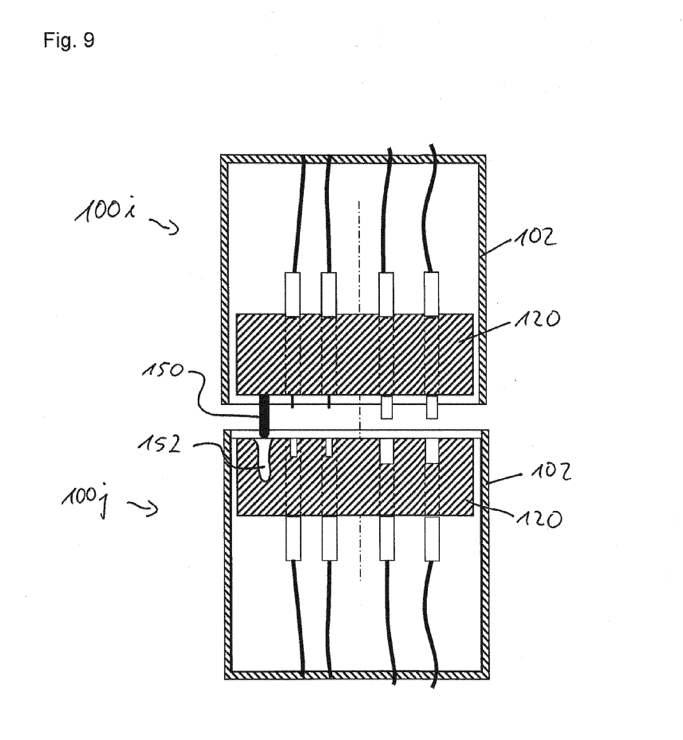

Figure 9 schematically depicts mating male and female connectors according to an embodiment in a cross-sectional top view. Male connector 100i comprises a mechanical alignment element 150, presently in the form of a pin, which is configured to establish form closure with a further mechanical alignment element 152 of the further connector 100j provided for mating with the connector 100i.

The use of more than one alignment element 150 per connector is also possible. Generally, the mechanical alignment elements 150 provide a precise alignment of both genders. Particularly, this method is more precise than a mere manual (i.e. visual) alignment performed by a service technician and is thus ideally suited to provide alignment especially in view of the alignment precision requirements of the optical contact elements.

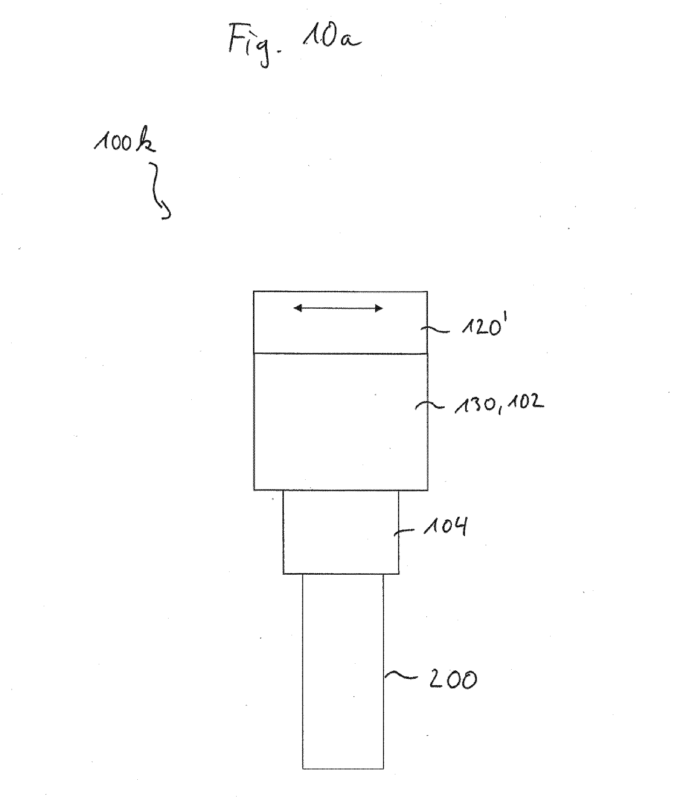

Figures 10a to 10e schematically depict aspects of a connector 100k according to a further embodiment. The connector 100k comprises a mounting element 120' which is rotatably attached to the housing element 130. Similar to the configuration of Figure 2, the mounting element 120' of Figure 10a forms part of the main body 102 of the connector 100k in that it is not integrated into the main body 102, but rather extends the main body 102 in an axial direction.

The double arrow indicates rotatability of the mounting element 120' with respect to the main body 102 or its housing element 130, respectively. According to one embodiment, the cable interface section 104 is configured to clamp the hybrid cable 200 mechanically and to provide sealing means to the cable 200.

According to a further embodiment, mechanical mounting means, which enable a mechanical fixing of the connector 100k to a complementary connector (not shown), may also be provided. For example, in case of a male connector, a coupling nut (not shown) may be provided which in a per se known manner may be fastened to a threaded section of a mating female connector (not shown).

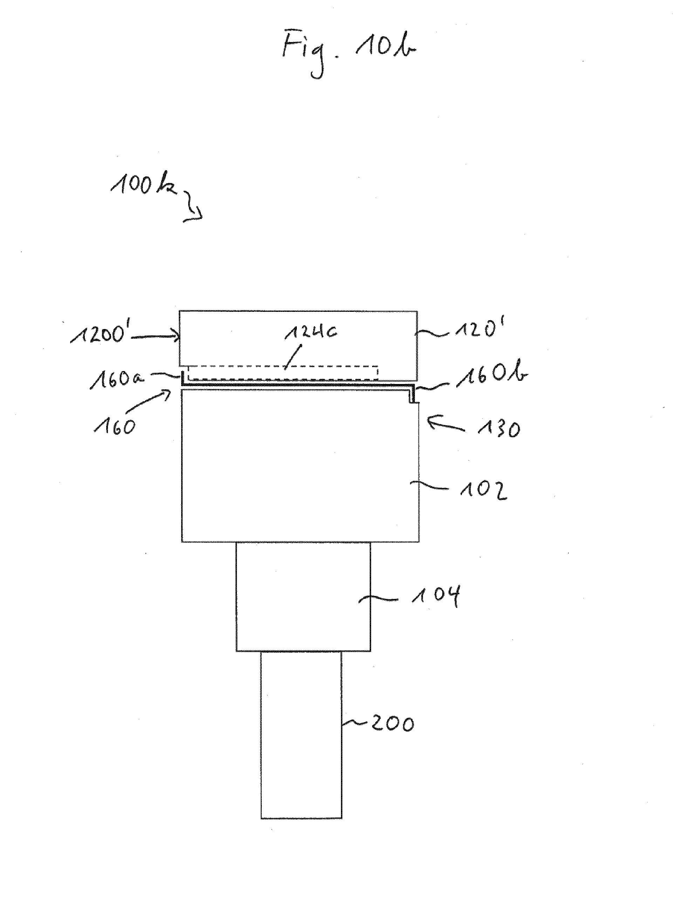

According to a further embodiment, which is depicted by Figure 10b, the mounting element 120' may comprise a groove 124c on its radially outer (i.e., side) surface 1200'. Similar to groove 124a of Figure 4a, the groove 1200' extends along a predetermined angle range on said surface 1200' thereby defining the angle range in which relative rotation of mounting element 120' is enabled with respect to the main body 102.

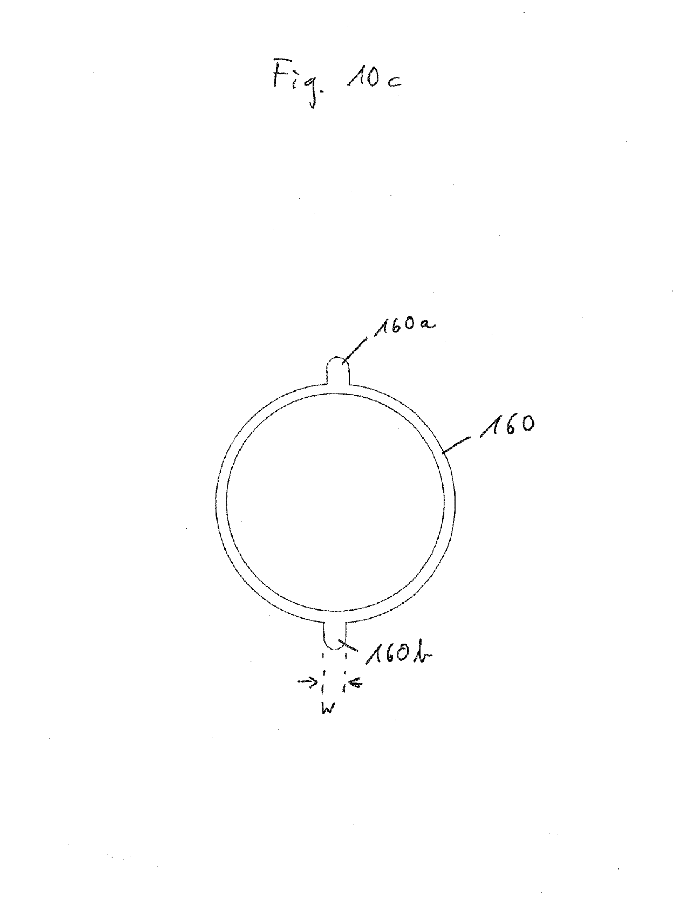

An alignment ring 160, which is also depicted by Figure 10c in detail, is arranged between components 120' and 130. The alignment ring 160 has a first protrusion 160a which may be bent so as to extend basically perpendicular from a ground plane which is identical with the drawing plane of Figure 10c. The direction of bending of the first protrusion 160a may e.g. correspond to a direction out of the drawing plane of Figure 10c. The alignment ring 160 further has a second protrusion 160b which may be bent so as to extend basically perpendicular from the ground plane which is identical with the drawing plane of Figure 10c. The direction of bending of the second protrusion 160b may e.g. correspond to a direction into of the drawing plane of Figure 10c. This yields the shape of the alignment ring 160 as depicted by Figure 10b. According to an embodiment, the above mentioned bending steps may be performed during manufacturing of the connector 100k or when attaching the connector 100k to said cable 200. However, it is also possible to perform said bending steps in the field. For example, it is also possible to provide various alignment rings 160, wherein at least the first protrusion 160a of the various rings comprises different mechanical dimensions, especially along an angular direction. Thus, by choosing a specific alignment ring with a first protrusion 160a having a specific width w (Figure 10c), the maximum angular range of rotation of said mounting element 120' with respect to the housing body 130, may be set. Alternatively to varying widths w of the first protrusion 160a, alignment rings may be provided which have at least one additional protrusion, so that the first protrusion 160a together with said additional protrusion (not shown) enters the groove 124c and limits the maximum angular range of rotation corresponding to a position of said protrusions.

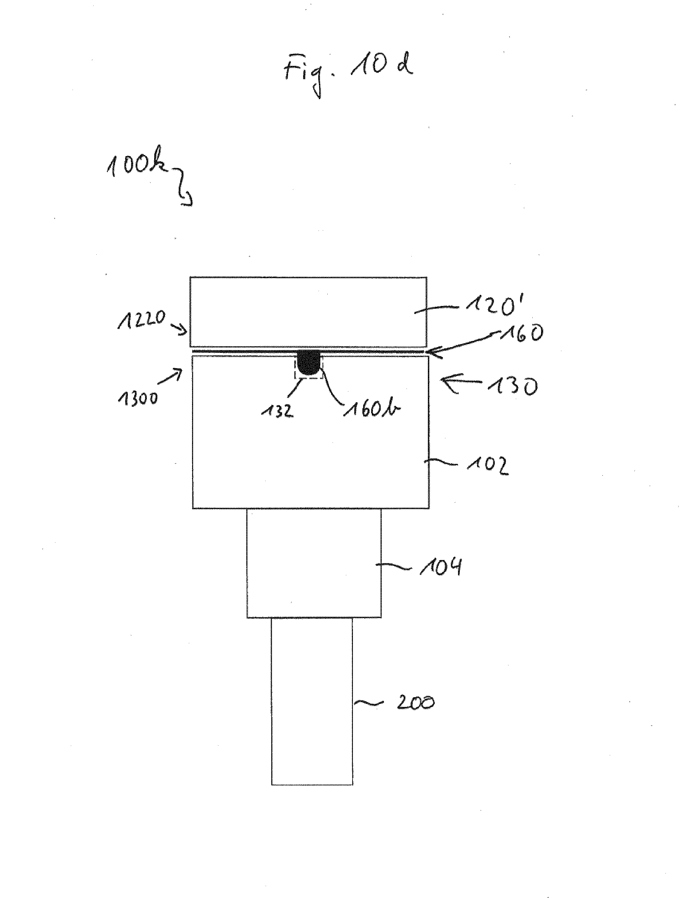

As can be seen from Figure 10b, the first protrusion 160a of the alignment ring 160a slides within the groove 124c of the mounting element 120'. As can be seen from Figure 10d, which depicts a front side view of connector 100k, the housing element 130 or main body 102, respectively, may also comprise a groove 132, which receives the second protrusion 160b of the alignment ring 160 and keeps it in place.

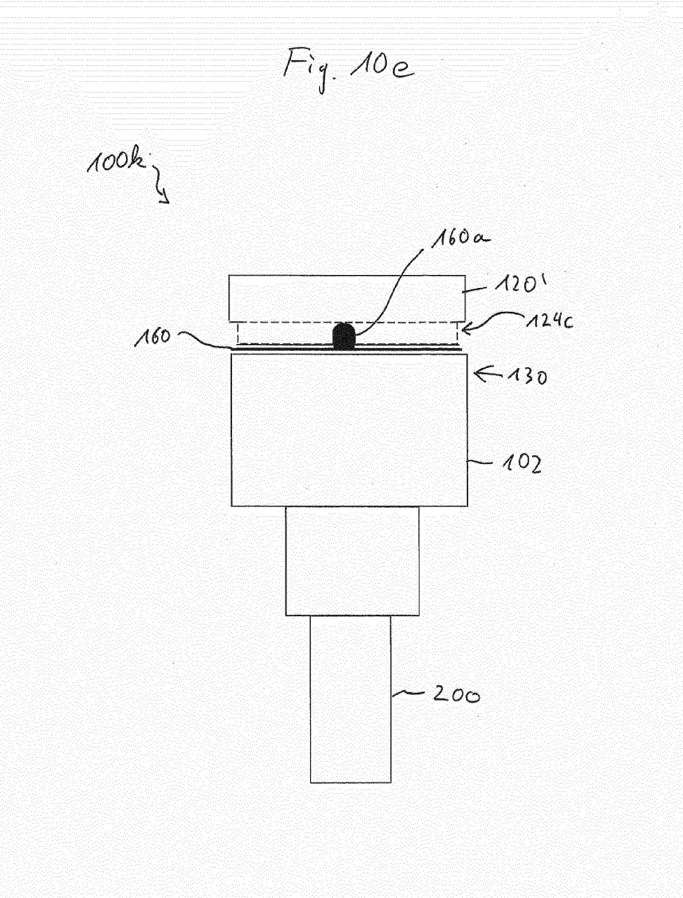

Figure 10e depicts a rear side view of the connector 100k, where the groove 124c and the first protrusion 160a sliding in said groove 124c can be seen.

While the outer shape of the mounting element 120' is basically cylindrical like the main body 102, the interior shape of said mounting element 120' may e.g. be similar to the mounting element 124a according to Figure 4a. However, according to one embodiment, no groove 124a is required, because the groove 124c is provided on the outer side surface of the mounting element 120', cf. Figure 10b. Also, in the embodiment of Fig. 10e, the interior portion of said mounting element is not required to be rotatably attached to its exterior portion, since said exterior portion of said mounting element 120' is already rotatably attached to said housing element 130 for effecting rotational alignment. According to a further embodiment, it is also possible to provide that at least one of said electric contact element and said optical contact element is rotatably attached to said mounting element 120', which yields the above explained advantages.

Generally, to provide sealing of the connector 100k, sealing means such as e.g. an O-ring (not shown) may be provided between e.g. the mounting element 120' and the housing element 130. According to one embodiment, the mounting element 120' and the housing element 130 may comprise threaded sections so that the components 120', 130 may be screwed together, thus moving them into each other in an axial direction. For example, a threaded axial end section 1220 (Figure 10d) of the mounting element 120' may comprise a first outer diameter, and a threaded axial end section 1300 of the housing element 130 may comprise a larger second outer diameter. When screwing these sections 1220, 1300 together, the sealing means (not shown, e.g. an O-ring arranged coaxially around the radial outer surface of the axial end section 1220 of the mounting element 120') may be brought into surface contact with a radially outer surface of the axial end section 1220 of the mounting element 120' and the radially inner surface of the axial end section 1300 of the housing element 130 thus providing sealing of an inner space of the connector 100k from environmental influences. In addition to coaxially moving the components 120', 130 into each other by the screwing process, the relative rotation effected by the screwing may also be employed for alignment of the mounting element 120' with respect to the housing element 130. I.e., once the components 120', 130 are sufficiently screwed together (coaxially moved into each other) by the screwing process so that proper sealing by the sealing means is effected, further screwing movement may be employed for rotationally aligning the mounting element 120' and its connecting elements 110, 112 (Figure 1) to facilitate mating with another connector.

The connector according to the embodiments may generally comprise contact elements of both genders (male/female). According to an embodiment, all contact elements 110, 112 are designed as male contact elements. According to a further embodiment, all contact elements 110, 112 are designed as female contact elements. According to a further embodiment, some contact elements are designed as male contact elements, and some other contact elements are designed as female contact elements. These variations apply to both the electrical and/or optical contact elements, as well as to the mechanical alignment elements 150, 152, cf. Figure 9. I.e., on one connector according to the embodiments, a male mechanical alignment element 150 (Figure 9) may also be combined with male and/or female electric and/or optical contact elements.

The connector 100, .., 100k according to the embodiments may e.g. be used for hybrid cables 200 which may be used within base stations for cellular mobile communications networks. Such base stations may comprise base band units (BBU) and radio remote units (RRU) which have to be connected to each other with fiber optical cable and (electrical) power cable. For more easy installation and better cost efficiency so called hybrid cables 200 may be used that combine power wires 210 (Figure 1) and optical fibers (212) in a single cable 200. Connection between multiple hybrid cables 200 is needed for instance in order to break-out from a so called riser cable that comprises power wires and optical fibers for a number of RRUs to individual single RRU cable that comprise power wires and optical fibers for only one RRU each. Such connectors for hybrid cable need to have multiple contacts for power and optical fibers. According to one embodiment, for the ease of installation and sealing functionality that may be mandatory for outdoor environment the connectors typically may have a round body, but can also be made with rectangular shape or other cross-sections.

Generally, in order to properly mate male and female connectors 100i, 100j (Figure 9), it is beneficial if both connectors 100i, 100j are precisely aligned to each other. For example, hybrid cable 200 made with aluminum armor (not shown), but also other cable configurations, can't be twisted in themselves, or at least can only be twisted to a limited degree. Consequently, conventional cable assemblies (two pieces of cable with attached conventional connector each) that have be joined to each other have to be installed in strict sequence one after another to guarantee the correct angular alignment of the respective cables to each other and thus of the respective male and female connectors of said cables. Thus, disadvantageously, with conventional connectors and cables, the cable routing and installation of at least one of the assemblies has to be started from the position of the joint. There are installation scenarios where the required installation sequence can't be achieved. This is the case for instance for so called tower top or roof top assemblies, where antenna and remote units are pre-installed in the factory on a metal construction including the cabling of hybrid cable to the RRUs. The whole TTA is hoisted up to a tower and is to be connected to the hybrid riser that is installed on the tower. In this scenario it is almost impossible to align conventional connectors of the hybrid cable on the TTA to the hybrid connectors of the riser cable, because twisting of the cables is strictly limited due to the mounting situation and the cable properties. This problem of conventional systems can be solved with the hybrid connector 100, .., 100k according to the embodiments that allows for rotation of at least one mounting element 120, male or female, by a predetermined angular range (according to one preferred embodiment, this predetermined angular range is at least 180°). Advantageously, the rotation can be made after installation of the connectors to the (non-twistable) hybrid cable 200, and even on site, i.e. after installation of respective cable assemblies to e.g. antenna towers and the like. Generally, by using the connectors according to the embodiments, the alignment for mating connectors 100i, 100j can be achieved on site with any cable orientation and thus offers superior flexibility and requires less ahead planning of cable orientations and the like.

According to one embodiment, a minimum of 180° rotation angle is realized between the mounting element 120 and the main body 102 of the connector. One application scenario according to the embodiments for joining two cables 200 is to have a non-rotatable (i.e., conventional) hybrid connector for one of the genders and to have one hybrid connector 100, .., 100k according to the embodiments of the other (i.e., complementary) gender, which preferably enables rotational alignment as explained above at least by 180° rotation angle. According to other embodiments, smaller maximum rotation angles are also possible.

Alternatively, both genders can be made rotatable. In that case, according to one preferred embodiment, at least 90° rotation angle may be beneficial for each connector.

The principle according to the embodiments may advantageously be applied to connectors with arbitrary shape, i.e. cross-section, and is particularly not limited to circular cross-sections. E.g., rectangular shape of the connector and/or individual contact elements is also possible. In some embodiments, a cable interface section 104 may be beneficial which comprises a circular cross-section for interfacing to the cable 200.

According to a preferred embodiment, to avoid damage or mechanical stress on the electrical wires and optical fibers due to the rotation of the mounting element 120 (Figure 1), the degree of rotation may be limited.

According to a further embodiment, mainly due the stiffness of the power wires embedded in the hybrid cable 200 there may be a certain counterforce (restoring force) if the mounting element 120 of a connector according to the embodiments is rotated against the stationary, i.e. nonrotating, hybrid cable 200. According to a further embodiment, in order to prevent the rotatable part 120 of the connector 100 turning back to its initial position, a friction force may be applied between the stationary part 102 and the rotatable connector part 120, 120', said friction force preferably being equal to or larger than larger than the counterforce (restoring force) of the hybrid cable wires.

According to a further embodiment, the mounting element 120 of the connector may be adjustable either manually or with a specific tool prior to mating. For this purpose, either directly the contact elements of the connector may be moved manually or by means of a corresponding tool, or, according to a further embodiment, the mounting element 120 may comprise a driving section capable of receiving a driving torque either directly from a user or from a corresponding tool. For example, a simple slit (not shown) or a hexagonal opening or the like may be provided in a disc-shaped mounting element 120 so that the rotation of the mounting element 120 may be effected by a screw driver or hexagon spanner inserted into said opening. According to a further embodiment, if a mechanical alignment element 150 (Fig. 9) is provided, it may also be designed suitable for receiving a driving torque to drive an alignment rotation.

According to a further embodiment, from the outside visible marks on either the connector or the tool may be provided so that visible inspection whether a desired rotational angle of the mounting element 120 with respect to the main body 102 is enabled.

According to a further embodiment, as specifically optical contact elements such as optical connectors need to be aligned very precisely, e.g. by a few µm (micrometers), self alignment pins or generally mechanical alignment elements 150, 152 (Figure 9) may be provided on the connector, which ensure a high precision of alignment that usually cannot be achieved on site by manual alignment only or by means of a simple tool such as a screwdriver. Thereby, high precision alignment can be achieved.

According to a further embodiment, the individual contact elements 110, 112 arranged on the mounting element 120 (Figure 1) are attached to the optical fibers 212 respectively electrical wire 212 of the hybrid cable 200. If the mounting element 120 is rotated in case of said contact elements 110, 112 being fixedly attached to the mounting element 120, a torsional moment would be applied to fibers and electrical wires (in addition to bending). This could lead to long term damages at least to the optical fibers, at the same time the mounting element 120 tends to turn back to its initial position. Therefore, according to one embodiment, it is preferred to have the contact elements 110, 112 of the optical fibers and electrical conductors freely rotatable arranged inside the mounting element 120a, cf. Figures 7a to 7c. Thus, the contact elements 110, 112 and attached wires / fibers may freely rotate counter wise to the mounting element 120a itself. As a consequence, there would be significantly reduced or even no torsional force on the fibers / wires, they only bend in a different direction. Moreover, the restoring force of the wires onto the mounting element 120a would be reduced. According to a further embodiment, in addition or alternatively to free rotation of the contact elements 110, 112 within the mounting element 120a, the attachment of the contact elements 110, 112 to the mounting element 120a may be designed to allow for a certain amount of axial (i.e., along the longitudinal axis LA of the connector 100) displacement between the mounting element 120a and the individual contact elements 110, 112, which further reduces the risk of mechanical damage to the conductors 210, 212 (Figure 1).

According to a further embodiment, for connectors with higher fiber counts (i.e., a large number of optical conductors ("fibers")), optical contact elements 112 may be used that accommodate multiple optical fibers in lines. An MPO (multiple-fiber push-on) connector for instance can accommodate up to e.g. 24 fibers in two lines in a single housing. If such connections are used as optical contact elements 112 inside a hybrid connector 100 according to the embodiments, it is beneficial if a free movement length of optical fibers 212 between the hybrid cable 200 (Figure 1) and the mounting element 120 is chosen rather large to allow for a limited amount of twisting the fibers.

The principle according to the embodiments allows for more easy installation of hybrid cable 200 regardless of an installation sequence if multiple joints between various cable assemblies have to be made.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Hybrid connector (100; 100a) comprising at least one electric contact element (110) and at least one optical contact element (112), wherein said at least one electric contact element (110) and said at least one optical contact element (112) are arranged in a mounting element (120; 120') of said connector (100; 100a), and wherein said mounting element (120; 120') is rotatably attached to a housing element (130) of said connector (100).

2. Connector (100) according to claim 1, wherein said mounting element (120) is integrated into a main body (102) of said connector (100).

3. Connector (100a) according to one of the preceding claims, wherein said mounting element (120') forms a part of the main body (102) of said connector (100a).

4. Connector (100a) according to one of the preceding claims, wherein said mounting element (120; 120') is rotatably attached to said housing element (130) such that a total angle of rotation of said mounting element (120; 120') relative to said housing element (130) is limited to about 400 degrees or less, preferably to about 200 degrees or less.

5. Connector (100a) according to one of the preceding claims, wherein at least one of said electric contact element (110) and said optical contact element (112) is rotatably attached to said mounting element (120; 120').

6. Connector (100a) according to one of the preceding claims, wherein at least one friction element (140, 142) is provided which is configured to apply a friction force to said mounting element (120; 120').

7. Connector (100i) according to one of the preceding claims, wherein a mechanical alignment element (150) is provided which is configured to establish form closure with a further mechanical alignment element (152) of a further connector (100j) being connected to said connector (100i).

8. Connector (100a) according to one of the preceding claims, wherein said mounting element (120) comprises a basically cylindrical shape, preferably circular cylindrical shape, with one or more openings (122) for receiving said contact elements (110, 112).

9. Connector (100a) according to claim 8, wherein said mounting element (120) comprises at least one groove (124a, 124b) on a radial outer surface and/or a front surface of said basically cylindrical shape.

10. Connector (100a) according to one of the preceding claims, wherein said connector comprises sealing means to protect an interior of said connector from environmental influences.

11. Cable (200), particularly hybrid cable having at least one electric conductor (210) and at least one optical conductor (212), comprising at least one connector (100a, .., 100k) according to one of the preceding claims.
